## Europäisches Patentamt
## European Patent Office
## Office européen des brevets

(11) Veröffentlichungsnummer: **0 145 810**
**A1**

(12) # EUROPÄISCHE PATENTANMELDUNG

(21) Anmeldenummer: 83112802.0

(51) Int. Cl.⁴: **F 16 C 7/00,** F 16 C 3/02

(22) Anmeldetag: 20.12.83

(43) Veröffentlichungstag der Anmeldung: 26.06.85
Patentblatt 85/26

(84) Benannte Vertragsstaaten: **AT CH DE FR GB IT LI**

(71) Anmelder: Schnell, Joachim, Dr., Amselweg 7,
D-6348 Herborn 4 (DE)

(72) Erfinder: Schnell, Joachim, Dr., Amselweg 7,
D-6348 Herborn 4 (DE)

(54) **Elastische Welle.**

(57) Eine elastische Welle ist aus mehreren koaxialen Schichten (1, 2, 3, 4, 5, 6, ...) aufgebaut, die aus parallel liegenden Fasern (11, 12, 13, 14, 15, 16 ...) bestehen, wobei sich die Fasern benachbarter Schichten miteinander kreuzen. Die Welle kann mit Kunststoff vergossen sein. Bei Torsionsbeanspruchung werden alle Fasern der Welle auf Zug oder Druck beansprucht. Die Faseranordnung kann so gewählt werden, daß die Faserbelastung unabhängig vom Schichtdurchmesser überall annähernd gleich groß ist. Es gibt also keine spannungsarmen Zonen wie etwa im Innern einer kompakten Drehstabfeder. Aufgrund dieser guten Materialausnutzung und der hohen Zugfestigkeit der Fasern sind erfindungsgemäße elastische Wellen den besten Stahlwellen oder Stahlfedern in Belastbarkeit und Federwirkung überlegen. Sie eröffnen außerdem neue technische Möglichkeiten durch bisher nicht bekannte Torsions-Zug-Druck-Federn. Durch Verwendung verschiedener Fasermaterialien und geeignete Auslegung sind die elastischen Wellen anpassungsfähig an viele verschiedene Anwendungsfälle.

Dr. Joachim Schnell

D-6518   Herborn 1

## Elastische Welle

Die Erfindung bezieht sich auf eine elastische Welle mit Fasern oder Drähten als wesentlichem Bestandteil zur Übertragung von Drehbewegungen und Drehmomenten oder zur Übersetzung von linearen Bewegungen und Kräften in Drehbewegungen und Drehmomente oder umgekehrt oder zur elastischen Energiespeicherung aufgrund ihrer Federwirkung oder für eine Kombination der Merkmale.

Alle Wellen sind mehr oder weniger elastisch. In vielen Fällen stört die Elastizität nicht, in manchen Fällen ist sie erwünscht, etwa zum Auffangen harter Stöße. Eine Welle mit gewollter Elastizität ist die bekannte Drehstabfeder.

Wird ein Stab zur Übertragung von Drehmomenten oder zur federnden Energiespeicherung tordiert, so werden in ihm Drehspannungen erzeugt, die in der Achse des Stabes gleich Null und am äußeren Umfang maximal sind. Die zulässige Randspannung, die vom verwendeten Material und seiner Bearbeitung abhängig ist, begrenzt das übertragbare Drehmoment und gemeinsam mit dem Elastizitätsmodul die federnd speicherbare Energie.

Zur Verbesserung der Materialeigenschaften von Kunststoffen ist die Verstärkung mit Fasern bekannt. Zur Stabilitätsverbesserung in mehreren Richtungen werden Schichten mit sich kreuzenden Fasern benutzt, meist in Form von Fasergeweben. Bei Blattfedern z.B. werden neben Schichten mit längsgerichteten Fasern, die maßgebend für die Federwirkung sind, zur besseren Querstabilität auch Schichten mit Fasern verwendet, die die längsgerichteten Fasern kreuzen. Bei Rohren und Schläuchen wird die Verstärkung mit Fasergewebeschlauch häufig benutzt. Bekannte faserverstärkte Kunststoffwellen, -stäbe oder -rohre erreichen nicht die Festigkeit und die Federwirkung von Stahlteilen gleicher Abmessungen.

Aufgabe der Erfindung ist die Konstruktion einer elastischen Welle, die die guten Eigenschaften von hochbelastbaren Fasern oder Drähten besser als die bekannten ausnutzt und in Bezug auf das übertragbare Drehmoment und die federnd speicherbare Energie Wellen aus Federstahl übertrifft.

0145810
J 008

Erfindungsgemäß wird die Aufgabe gelöst durch eine elastische Welle mit Fasern oder Drähten als wesentlichem Bestandteil zur Übertragung von Drehbewegungen und Drehmomenten oder zur Übersetzung von linearen Bewegungen und Kräften in Drehbewegungen und Drehmomente oder umgekehrt oder zur elastischen Energiespeicherung aufgrund ihrer Federwirkung oder für eine Kombination der Merkmale, die aus mehreren koaxialen Schichten besteht oder aus spiralförmig angeordneten annähernd koaxialen Schichten, wie sie durch Aufwicklung von bandförmigen Schichten entstehen, wobei jede Schicht aus wenigstens annähernd parallel zueinander liegenden Fasern oder Drähten besteht oder solche enthält, und die Fasern oder Drähte benachbarter Schichten sich miteinander kreuzen.

Bevorzugte Ausführungsformen sind in den abhängigen Ansprüchen 2 bis 7 angeführt, ein einfaches Herstellungsverfahren im Anspruch 3.

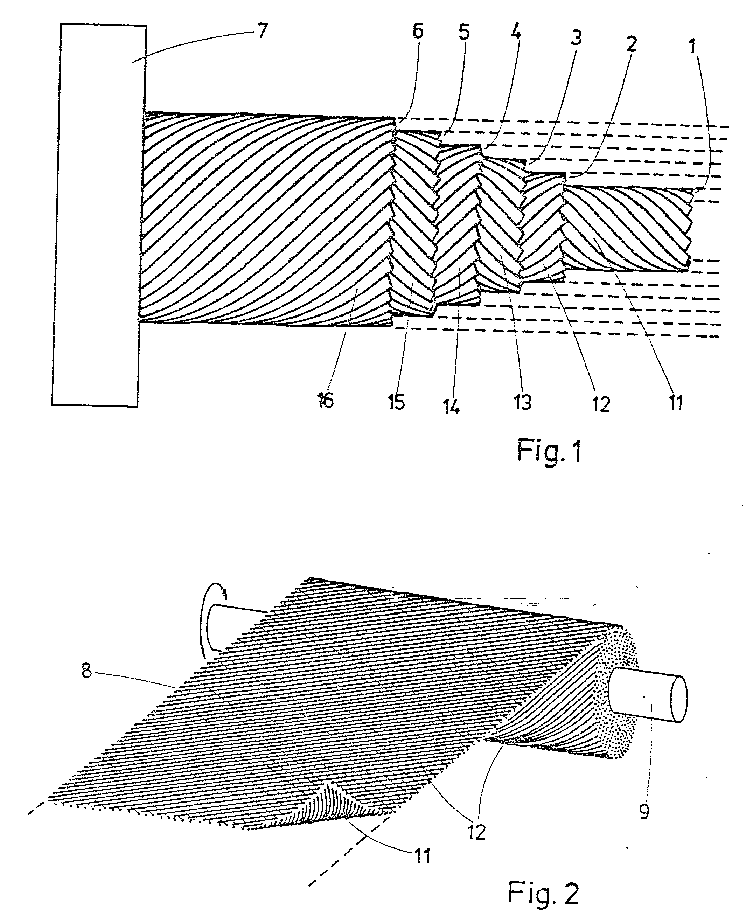

Die Wirkungsweise einer erfindungsgemäßen elastischen Welle wird deutlich bei Betrachtung des prinzipiellen Aufbaus, wie er in Figur 1 skizziert ist. Im rechten Teil der Figur 1 sind die oberen Schichten abgewickelt und der Schichtaufbau und die sich kreuzenden Fasern benachbarter Schichten zu erkennen. Werden die beiden Enden der Welle (das rechte Ende ist in Figur 1 nicht eingezeichnet) gegeneinander verdreht, so verhalten sich zwei benachbarte Schichten unterschiedlich: Während die erste eine Vergrößerung des Schichtdurchmessers anstrebt, versucht die zweite ihren Schichtdurchmesser zu verkleinern. Ist die erste die innere und die zweite die äußere der beiden betrachteten Schichten, so werden die Schichten an den Kreuzungspunkten der Fasern aufeinander gepreßt und die Fasern der inneren Schicht gestaucht und die der äußeren Schicht gedehnt. Für alle Schichten - mit Ausnahme der äußersten und innersten bei ungünstiger Drehrichtung - der elastischen Welle gilt: Bei Belastung der Welle werden die Fasern entweder gedehnt oder gestaucht, also auf Zug oder Druck beansprucht; es gibt keine spannungsfreien Zonen wie im Zentrum von tordierten homogenen Wellen. Durch geeignete Auslegung der Faserschichten kann man erreichen, daß die Fasern der inneren Schichten genau so stark belastet werden wie die der äußeren Schichten. Die Materialausnutzung einer erfindungsgemäßen Welle ist deshalb viel besser als die einer homogenen Welle. Es kommt noch hinzu, daß Fasern und dünne Drähte eine wesentlich höhere Zugfestigkeit haben als kompaktes Material.

Die seit langem bekannte stabilitätsverbessernde Anordnung von sich kreuzenden Fasern hat überraschenderweise bei erfindungsgemäßer Anwendung auf elastische Wellen außerordentliche Vorteile: Erfindungsgemäße elastische Wellen aus mit Kunststoff vergossenen Kohlenstoffasern können bei gleichem Durchmesser ein größeres Drehmoment übertragen als Wellen aus gehärtetem Federstahl, in Bezug auf das Gewicht sind sie mindestens um den Faktor 7 besser. Erfindungsgemäße Federn aus Glasfasern können pro Gewichtseinheit eine elastische Energie von mehr als 6 Wh/kg speichern, erreichen damit etwa 25 % der Speicherfähigkeit eines Bleiakkus und übertreffen die besten Stahlfedern um den Faktor 50. Erfindungsgemäße Wellen und Federn können nach einfachen Verfahren billiger hergestellt werden als Stahlwellen und Stahlfedern gleicher Abmessungen.

Der Beschreibung der Erfindung sind sechs Zeichnungen beigefügt:

Figur 1: Prinzipieller Aufbau einer elastischen Welle.

Figur 2: Skizzierung eines einfachen Herstellungsverfahrens.

Figur 3: Faserwindungszahlen für eine mit hohem Drehmoment belastbare Welle.

Figur 4: Faserwindungszahlen für eine Torsionsfeder mit großer Energiespeicherfähigkeit.

Figur 5: Faserwindungszahlen für eine Torsions-Zug-Druck-Feder.

Figur 6: Kennlinienfeld für eine Torsions-Zug-Druck-Feder.

Die Erfindung wird im folgenden anhand von vier Ausführungsbeispielen beschrieben:

Beispiel 1

Figur 1 zeigt den prinzipiellen Aufbau einer erfindungsgemäßen elastischen Welle. Im rechten Teil der Zeichnung sind die oberen Schichten abgewickelt. Die Schichten sind von innen nach außen mit 1 bis 6 numeriert, ebenso die zugehörigen Fasern 11 bis 16. Die Fasern 11, 13 und 15 der Schichten 1, 3 und 5 zeigen eine negative Steigung, die Fasern 12, 14 und 16 der Schichten 2, 4 und 6 eine positive. Die Steigungswinkel von -45° und +45° und der daraus resultierende Kreuzungswinkel der Fasern von 90° sind günstig für die Übertragung von hohen Drehmomenten. Zur Herstellung einer einfachen Welle dieser Art eignet sich folgendes vierstufige Verfahren:

1. Es wird zunächst ein Band 8 aus sich kreuzenden Kohlenstoffasern vorgefertigt, wie es in Figur 2 skizziert ist. Um die unten liegenden, von oben nicht sichtbaren Fasern 11 des Bandes 8 deutlich zu machen, wurden sie durch dünne Linien angedeutet und eine Ecke des Bandes 8 hochgeklappt. An den Kreuzungspunkten sind die Fasern 11 und 12 miteinander verklebt oder vernetzt oder anders fixiert. Um die Bandfestigkeit zu erhöhen, können die Fasern auch in ein Trägermaterial eingebettet oder auf einer Trägerfolie lösbar angeklebt sein, die kurz nach dem Wickeln (s.Punkt 2) wieder entfernt wird. Die Breite des vorgefertigten Bandes ist etwas größer als die spätere Länge der Welle.

2. Das Band 8 aus sich kreuzenden Kohlenstoffasern 11 und 12 wird auf ein Kernrohr 9 oder einen massiven Kern 9 gewickelt, bis der gewünschte Durchmesser der Welle erreicht ist. Es muß möglichst dicht gewickelt werden, sodaß ein stabiler Wickelkörper entsteht, der sich nicht merklich eindrücken läßt.

3. Der Bereich der späteren Welle wird fixiert. Das kann z.B. durch passend geformte Schalen, durch Verkleben der letzten Windungen oder durch ein Kunststoffband erfolgen, das um den Wickelkörper gewickelt und dann durch Kleben oder Schweißen fixiert wird. Die an den beiden Wickelenden überstehenden Kohlenstoffasern werden hochgebogen und zu einer Halterung geformt, in Figur 1 ist diese Halterung in Form eines Flansches 7 skizziert. Die flexiblen Kohlenstoffasern erlauben ohne großen Aufwand die Fertigung von beliebigen, an den jeweiligen Anwendungsfall angepaßten Halterungen.

4. Der Wickelkörper einschließlich der Halterungen wird im Vakuum mit Epoxydharz, Polyesterharz, Polyurethanharz oder anderen Kunststoffen vergossen. Geeignet sind alle dünnflüssigen Harze, die sich zu Formkörpern mit guter Scherfestigkeit verarbeiten lassen. Eine erfindungsgemäße elastische Welle, hergestellt nach diesem Verfahren aus 77 Volumprozent marktüblichen Kohlenstoffasern von 7 µm Stärke, einer Zugfestigkeit von mindestens 3 kN/mm$^2$ und einem Elastizitätsmodul von 235 kN/mm$^2$, aufgewickelt auf ein Polyamid-Kernrohr von 6 mm Innen- und 8 mm Außendurchmesser und vergossen mit Epoxydharz kann bei einem Wellendurchmesser von 20 mm Drehmomente bis zu 1700 Nm übertragen. Bei 200 mm wirksamer Länge wiegt die Welle ohne Halterungen 91 g. Sie verdreht sich bei voller Belastung um etwa 30°. Eine kompakte Stahlwelle aus gehärtetem Federstahl kann bei einem Durchmesser von 20 mm maximal ein Drehmoment von 1100 Nm übertragen, ihr Gewicht beträgt 490 g.

Beispiel 2

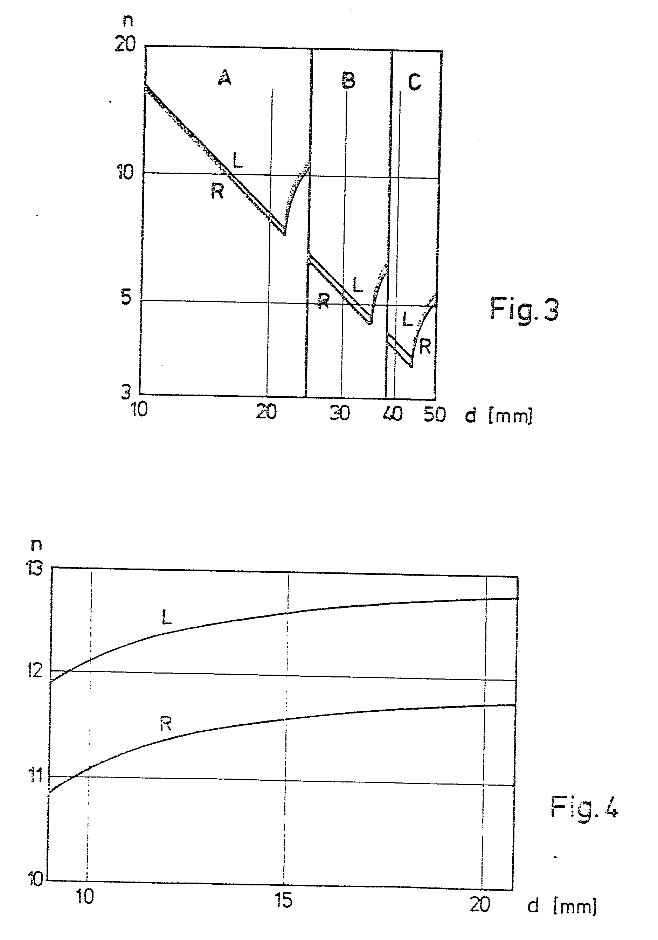

In Bezug auf das übertragbare Drehmoment stellt die Welle nach Beispiel 1 noch nicht das Optimum dar. Noch bessere Ergebnisse lassen sich durch Verwendung mehrerer Kohlenstoffasersorten und durch Berechnung der jeweils günstigten Steigung oder Windungszahlen der Fasern erreichen. In diesem Beispiel wird eine optimierte Welle beschrieben, die aus drei marktüblichen Kohlenstoffasersorten aufgebaut ist. Die Sorte A hat bei einem Elastizitätsmodul von $E_A$ = 345 kN/mm$^2$ eine Zugfestigkeit von mindestens $\sigma_A$ = 2,2 kN/mm$^2$, die Sorte B hat die Werte $E_B$ = 275 kN/mm$^2$ und $\sigma_B$ = 2,8 kN/mm$^2$ und die Sorte C die Werte $E_C$ = 235 kN/mm$^2$ und $\sigma_C$ = 3 kN/mm$^2$. Mit einer elektronisch gesteuerten Wickelmaschine werden nun Schicht für Schicht die Kohlenstoffasern mit definierter Windungszahl auf einen Kern von 10 mm Durchmesser gewickelt. Die Windungszahlen n sind so berechnet, daß sich bei den gegebenen Zugfestigkeiten ein möglichst großes Drehmoment ergibt und die in axialer Richtung wirkenden Kräfte auch bei voller Belastung der Welle im Uhrzeigersinne klein bleiben. Sie sind für eine Welle von 50 mm Außendurchmesser und einer Länge von 500 mm in Figur 3 in Abhängigkeit vom Schichtdurchmesser d wiedergegeben. Dabei gilt die mit R bezeichnete Kurve für Schichten mit gradzahliger Numerierung und positiver Fasersteigung, bei denen die Fasern eine rechtsdrehende Schraube bilden. Die mit L bezeichnete Kurve gilt für Schichten mit ungradzahliger Numerierung und negativer Fasersteigung, bei denen die Fasern eine linksdrehende Schraube bilden. Aus der Figur 3 ist auch ersichtlich, in welchen Bereichen die Fasersorten A, B und C verwendet werden. Es zeigt sich, daß auch für diese optimierte Welle der Steigungswinkel der Fasern in weiten Bereichen bei 45° liegt (gradliniger Kurvenbereich), bei größeren Durchmessern wird von diesem Steigungswinkel abgewichen, damit die maximal zulässigen Zugfestigkeitswerte nicht überschritten werden.

Mit dieser Welle können Drehmomente bis zu 31860 Nm übertragen werden, ohne daß die genannten Zugfestigkeitswerte an irgendeiner Stelle der Welle überschritten werden. Bei voller Belastung wird die Welle um 34° tordiert. Wenn sie einschließlich ..... Kernbereich mit Epoxydharz vergossen ist, wiegt sie ohne Halterungen 1590 g. Es ist auch möglich, die Welle ohne Verguß auf einen massiven Kern, z.B. einen Stahlstab, zu wickeln, der in den Halterungen befestigt ist, um die auftretenden Axialkräfte aufzufangen.

Eine Stahlwelle von 50 mm Durchmesser kann maximal 17180 Nm übertragen. Zur Übertragung von Drehmomenten bis 31860 Nm ist eine Stahlwelle von 61,4 mm Durchmesser erforderlich, die 11,560 kg wiegt, also mehr als siebenmal so viel wie die beschriebene erfindungsgemäße Welle gleicher Leistung.

Die erfindungsgemäße elastische Welle hat gegenüber der Stahlwelle noch den Vorteil, daß ihre Federwirkung wesentlich größer ist. Sie kann viermal soviel Rotationsenergie elastisch speichern wie die Stahlwelle und übersteht deshalb kurzzeitige hohe Stoßbelastungen viel besser.

Eine weitere Verbesserung der in den Beispielen 1 und 2 beschriebenen Wellen ist dadurch möglich, daß Fasern mit größerer Zugfestigkeit verwendet werden. Auch die Verwendung von mehr als drei Fasersorten bringt weitere Vorteile. Die Beispiele, insbesondere das Beispiel 1 zeigen, daß schon mit qualitativ durchschnittlichen Kohlenstoffasern und einer einfachen Technik gute Ergebnisse erzielt werden.

Beispiel 3

Erfindungsgemäße elastische Wellen sind in der Lage, große Energiemengen elastisch zu speichern. Die maßgebende Kenngröße für die elastische Speicherfähigkeit eines Materials ist der Wert $\sigma^2/E$, wenn die pro Federvolumen gespeicherte Energie betrachtet wird, und der Wert $\sigma^2/E\rho$, wenn die gespeicherte Energie pro Federgewicht betrachtet wird, wobei $\sigma$ die maximal zulässige Zugspannung, E der Elastizitätsmodul und $\rho$ die Dichte ist. Besonders hohe Kenngrößenwerte werden mit Glas-, Quarz-, Keramik- und Kohlenstoffasern erreicht, aber auch mit Kunststoffasern aus Polyimid, Polyamid, Polyacrylat, Polyethylentherephthalat, Polycyclobutadien,

Polycycloacrylnitril und anderen. Infrage kommen auch dünne Drähte aus Federstahl, Federbronze, Wolfram und anderen Metallen.

Fasern aus R-Glas haben bei einem Faserdurchmesser von etwa 14 μm einen Elastizitätsmodul von 86 kN/mm$^2$ und eine Zugfestigkeit von 3,6 kN/mm$^2$. Eine daraus hergestellte erfindungsgemäße rohrförmige Torsionsfeder (Drehfeder) vom Innendurchmesser 9 mm, dem Außendurchmesser 20,8 mm und der Länge 100 mm kann bei einem Torsionswinkel von 180$^o$ ein Drehmoment von 900 Nm aufnehmen, also eine Energie von 1414 Nm = 0,3927 Wh speichern. Die Faserwindungszahlen, die in Figur 4 in Abhängigkeit vom Schichtdurchmesser d angegeben sind, wobei L und R dieselbe Bedeutung wie im Beispiel 2 haben, wurden so berechnet, daß bei voller Belastung die Zugspannungen aller gedehnten Fasern gleichmäßig bei 3,3 kN/mm$^2$ liegen und die in Achsrichtung auftretenden Kräfte bei Torsion im Uhrzeigersinne klein sind. Die Feder hat eine lineare Charakteristik, wobei beim Start eine kleine Verzögerung beobachtet wird, wenn die Wicklung nicht stramm genug erfolgte. Eine kleine Längenänderung der Feder hat nur einen geringen Einfluß auf ihre Eigenschaften. Vergossen mit weichelastischem Polyurethanharz wiegt die Feder ohne Halterungen 61 g, sie hat also eine Energiespeicherfähigkeit von 6,45 Wh/kg und erreicht damit immerhin 25 % der Energiespeicherfähigkeit eines Bleiakkus.

Die besten bekannten Federn sind vorgesetzte Drehstabfedern aus Federstahl. Durch das Vorsetzen, das heißt Verdrehen in Belastungsrichtung über die Fließgrenze, wird eine beachtliche Entlastung der kritischen Randzone erreicht. Eine Feder dieser Art, die wie die beschriebene erfindungsgemäße Feder bei einem Drehwinkel von 180$^o$ ein Drehmoment von 900 Nm aufnehmen kann, hat bei einem Durchmesser von 16,5 mm eine wirksame Länge von fast 2 m und wiegt 3,3 kg. Die Stahlfeder hat also mit 0,12 Wh/kg nur knapp 2 % der Energiespeicherfähigkeit einer erfindungsgemäßen Feder.

Beispiel 4

In den Beispielen 1 bis 3 wurden primär die an der elastischen Welle wirkenden Drehmomente betrachtet. Es wurde erwähnt, daß auch Kräfte in axialer Richtung auftreten, die bei Wellen und Torsionsfedern unerwünscht sind und durch geeignete Anordnung der Fasern klein gehalten werden können (Beispiel 2 und 3). Durch geeignete Anordnung der Fasern kann man die Axialkräfte auch betonen und die erfindungsgemäße elastische Welle bildet dann eine Torsions-Zug-Druck-Feder.

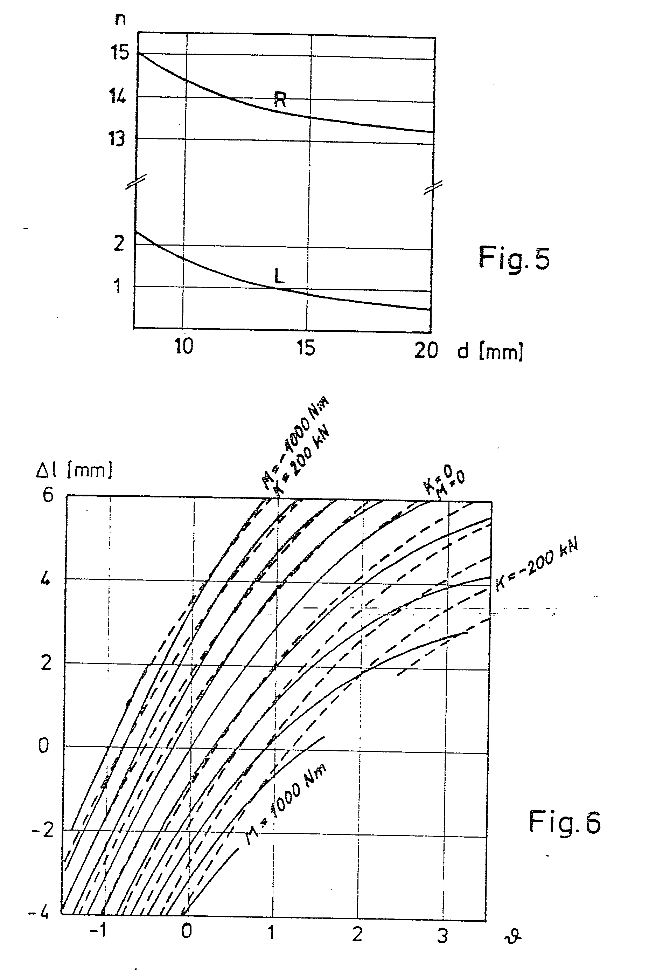

In Figur 5 sind die Windungszahlen n als Funktion des Schichtdurchmessers d für eine rohrförmige erfindungsgemäße Torsions-Zug-Druck-Feder vom Innendurchmesser 8 mm, dem Außendurchmesser 20 mm und der Länge 100 mm aufgetragen. Wieder gilt die Kurve L für die Schichten mit ungradzahliger Numerierung, bei denen die Fasern eine linksdrehende Schraube bilden, und die Kurve R für die gradzahligen Schichten mit Rechtsschraube. Die Schichten L bestehen aus R-Glasfasern von 7 µm Dicke, der Zugfestigkeit $\sigma = 3,6$ kN/mm$^2$ und dem Elastizitätsmodul $E_G = 86$ kN/mm$^2$; die Schichten R bestehen aus Kohlenstoffasern von derselben Dicke und Zugfestigkeit, aber dem Elastizitätsmodul $E_K = 235$ kN/mm$^2$. Durch Verwendung dieser Fasern und die in Figur 5 angegebenen Windungszahlen wird erreicht, daß die Feder bei Torsion, Streckung oder Stauchung innerhalb ihres Arbeitsbereiches ihr Volumen nur wenig ändert. Die Feder kann deshalb mit einem weichelastischen Kunststoff wie Polyurethan- oder Silikonharz vergossen werden. Die Halterungen werden wie in den bisherigen Beispielen durch Vergießen mit einem hartelastischen Kunststoff hergestellt.

Die Charakteristik der Torsions-Zug-Druck-Feder ist in Figur 6 festgehalten; aufgetragen ist das Drehmoment M und die in axialer Richtung wirkende Kraft K als Funktion des Drehwinkels $\vartheta$ (in Bogenmaß) und der Längenänderung $\Delta l$. $\vartheta$ ist positiv, wenn die Welle im Uhrzeigersinne tordiert wird; M ist positiv, wenn das von außen angelegte Drehmoment im Uhrzeigersinne wirkt; K ist positiv, wenn die von außen angelegte Axialkraft eine Zugkraft ist. Die ausgezogenen Kurven sind Kurven gleichen Drehmoments M, jeweils in Schritten von 200 Nm eingezeichnet. Die gestrichelten Kurven sind Kurven gleicher Axialkraft K mit der Schrittweite von 50 kN. Im ganzen eingezeichneten Bereich wird an keiner Stelle der Feder die Faserzugspannung von 3 kN/mm$^2$ überschritten; das abrupte Ende einiger Kurven hat seine Ursache darin, daß hier die Zugspannung von 3 kN/mm$^2$ erreicht wird.

Wird die Feder in axialer Richtung auseinander gezogen oder zusammen gedrückt, so weicht sie aus, indem sich ihre Enden gegeneinander verdrehen. Das geht kräftelos längs eines Weges, der in

Figur 6 durch die weitgehend übereinstimmenden Kurven M=0 und K=0 wiedergegeben ist. Bei Anwendung von Kräften ist es mit einer erfindungsgemäßen Torsions-Zug-Druck-Feder möglich, Zug- oder Schubkräfte und -bewegungen in Drehmomente und Drehbewegungen zu übersetzen. Solche Federn sind sehr gut geeignet für Federgetriebe, wie sie in den Europäischen Patentschriften EP 0021452 und EP 0065023 beschrieben werden. Durch teilweise Zwischenspeicherung der Antriebsenergie in derartigen Federn und spätere Gleichrichtung der Rotationsbewegung durch Freiläufe oder Schaltkupplungen können Federgetriebe eine Antriebs-Hin- und Herbewegung in eine kontinuierliche Drehbewegung umwandeln, wobei sich die Abtriebsdrehzahl stufenlos antriebs- und lastabhängig einstellt.

Bei Torsions-Zug-Druck-Federn müssen die Fasern benachbarter Schichten nicht jeweils eine Rechts- und eine Linksschraube bilden wie in dem beschriebenen Beispiel, sie können auch gleichsinnige Schrauben mit unterschiedlicher Steigung bilden. Das gilt erst recht für Zug-Druck-Federn, die sich aus Torsions-Zug-Druck-Federn ergeben, die so ausgelegt sind, daß die Drehmomente klein bleiben.

Die vier Ausführungsbeispiele können nicht alle vorteilhaften Ausführungen der Erfindung beschreiben. Sie werden hier ergänzt durch einige grundlegende Bemerkungen, weitere Ausführungshinweise und Anwendungsbeispiele.

Eine erfindungsgemäße elastische Welle ist ein elastisches mechanisches Bauteil mit drei Freiheitsgraden:

1. Die beiden Enden der Welle können gegeneinander verdreht (tordiert) werden.

2. Die Welle kann ihre Länge ändern.

3. Die Welle kann ihren Durchmesser ändern.

Alle drei Freiheitsgrade und deren Kraftwirkungen können ausgenutzt werden. So kann z.B. die Durchmesseränderung bei Umschlingungskupplungen Anwendung finden. Die drei Freiheitsgrade sind voneinander abhängig, die Gesetze dieser Abhängigkeit sind durch geeigneten Aufbau der Welle manipulierbar. Die beiden Wellenenden (Halterungen) können in begrenztem Maße in radialer Richtung gegeneinander verschoben oder gekippt werden. Nicht erwünschte Wirkungen können durch geeignete Auslegung, durch den Verguß der Welle oder andere Maßnahmen reduziert oder aufgefangen werden.

Der Aufbau erfindungsgemäßer elastischer Wellen kann in vielfältiger Weise variiert werde:

- Vorgefertigte Bänder mit unterschiedlichen Fasersteigungen werden zu Wellen gewickelt. Die Bänder können aus einer, zwei oder mehr Faserschichten zusammengesetzt sein.

- Die Steigungswinkel jeder zweiten Schicht sind einander ungefähr gleich.

- In Abhängigkeit vom Schichtdurchmesser werden unterschiedliche Faserwindungszahlen oder Fasersteigungen benutzt.

- Die Steigungswinkel der Fasern benachbarter Schichten sind absolut ungefähr gleich oder

- die Steigungswinkel der Fasern benachbarter Schichten sind unterschiedlich.

- Die Fasern jeder zweiten Schicht bilden gleichsinnige Schrauben, die Fasern der dazwischen liegenden Schichten bilden gegensinnige Schrauben.

- Die Fasern aller Schichten bilden gleichsinnige Schrauben.

- Die Schraubenrichtung kann sich innerhalb einer Welle ändern.

- In benachbarten Schichten, aber auch innerhalb einer Schicht, können Fasern unterschiedlicher Dicke benutzt werden.

- Die Wellen bestehen aus einheitlichem Fasermaterial oder

- in Abhängigkeit vom Schichtdurchmesser werden unterschiedliche Materialien benutzt oder

- für benachbarte Schichten werden unterschiedliche Materialien benutzt.

- Die Fasern einer Schicht sind entweder dicht an dicht oder mit Abstand zueinander gewickelt.

- Eine Schicht enthält eine oder mehrere im gleichen Sinne gewickelte Faserlagen.

- Es können neutrale Faserschichten eingefügt sein, die keine oder wenig Kräfte aufnehmen. Wenn z.B. bei hohen Drehwinkeln und großem Wellendurchmesser die Kreuzungswinkel benachbarter aktiver Schichten klein werden, können mit Zwischenschichten wieder große Kreuzungswinkel erreicht werden.

- Zwischen den Schichten mit sich kreuzenden Fasern können Zwischenschichten aus anderen Materialien eingefügt sein, z.B. Kunststofffolien.

- Die Fasern können durch Faserbündel (Rovings) ersetzt werden.

Die Schichtdicke soll aber nicht zu groß und die Fasern gleichmäßig über die Schicht verteilt sein. Durch Faserbündel läßt sich die Faserpackungsdichte etwas vergrößern.

- Anstelle der Fasern können Drähte oder auch dünne schmale Bänder benutzt werden.

- Anstelle der Fasern können auch Garne benutzt werden.

- Der Faser- oder Drahtquerschnitt muß nicht rund sein, mit rechteckigem Querschnitt wird eine bessere Raumausnutzung erreicht.

- Die Fasern können unter Zug gewickelt werden. Die Zugspannung kann sich dabei auch von Schicht zu Schicht oder in Abhängigkeit vom Schichtdurchmesser ändern.

- Eine Vorspannung kann auch dadurch erreicht werden, daß bei benachbarten Schichten Materialien mit unterschiedlichem Ausdehnungskoeffizienten benutzt werden und der Wickelvorgang bei einer Temperatur erfolgt, die anders ist als die spätere Einsatztemperatur.

- Die elastischen Wellen werden entweder auf Dorne gewickelt, die nach dem Wickeln oder nach Fertigstellung der Welle wieder entfernt werden oder auf Dorne oder Rohre, die in der Welle verbleiben.

- Verbleibende Dorne oder Rohre können so ausgebildet sein, daß sie radial wirkende Kräfte der Faserschichten oder axial wirkende Kräfte der Welle ganz oder teilweise aufnehmen. Für Federn mit größeren Drehwinkeln können die Dorne auch aus harten Teilstücken (Scheiben oder Ringe) bestehen, die elastisch miteinander verklebt sind oder sich gleitend gegeneinander bewegen können.

- Die Halterungen der elastischen Wellen werden aus den an den Stirnseiten der Wickelkörper überstehenden Fasern oder Drähten gebildet. Bevorzugt wird ein Verguß der Halterungsfasern mit Kunststoff, wobei die Fasern so ausgerichtet werden, daß die Halterung bei der vorgesehenen Belastung gute Festigkeitswerte erreicht.

- Die Halterungen können auch vorgefertigte Formteile enthalten.

- Die Fasern oder Drähte der Halterung können bereits beim Wickeln in vorgefertigten Formkörpern verankert oder befestigt werden.

- Die Fasern oder Drähte können an den Stirnseiten der Wellen enden oder dort umgelenkt und für die nächste Schicht benutzt werden.

0145810

- Der wirksame Bereich der elastischen Welle ist entweder nur aus Fasern oder Drähten aufgebaut oder mit Kunststoff vergossen oder teilweise mit Kunststoff vergossen oder beschichtet.
- Bei unvergossenen Wellen ist eine definierte Positionierung der Halterungen beim Einbau der elastischen Wellen zweckmäßig.
- Das Vergußmaterial für die Welle richtet sich nach den zulässigen Verformungen. Bei kleinen Drehwinkeln ist ein Verguß mit hartelastischen Kunststoffen möglich (Beispiele 1 und 2). Bei Federn mit größerer Verformung benutzt man weichelastische Kunststoffe (Beispiele 3 und 4).
- Bei unvergossenen Wellen oder bei Wellen mit weichem Verguß ist der Faserübergang von der hart vergossenen Halterung zur Welle kritisch, weil hier neben der Zug- oder Druckspannung noch eine Faserknickung auftritt. Bringt man auf der Halterung eine oder mehrere Kunststoffschichten mit zunehmender Weichheit an, so wird der Knickradius größer und damit unkritisch. Für diese Zwischenschichten sind insbesondere Polyurethanharze geeignet, die in beliebigen Abstufungen von hart- bis weichelastisch auf dem Markt sind.
- Beim Vergießen der elastischen Welle mit Kunststoff kann die Welle durch Tordieren oder durch Längenänderung vorgespannt werden.
- Es können mehrere Federn parallel geschaltet werden, z.B. indem man Federn mit unterschiedlichem Durchmesser und passender Länge ineinander steckt. Durch Verdrehen der Federn gegeneinander kann eine Vorspannung erreicht werden, die leicht verändert werden kann.
- Bei ineinander gesteckten Federn kann durch gezielte Radiusänderung erreicht werden, daß sich die Federn aufeinander pressen oder abheben. Damit können bestimmte Federcharakteristiken realisiert werden.

Durch unterschiedlichen Aufbau können erfindungsgemäße elastische Wellen mit unterschiedlichen Eigenschaften hergestellt werden. Die Berechnung folgt dabei einfachen Gesetzen der Mechanik, kann aber durch die gegenseitige Beeinflussung vieler Schichten aufwendig werden. Im folgenden sind einige Wellen und Federn mit Eigenschaften angeführt, die durch einen geeigneten Aufbau beeinflußt oder optimiert werden können. Wenn diese Eigenschaften

durch charakteristische Aufbaumerkmale erreicht werden können, sind diese in Klammern hinzugefügt.

- Welle für hohe Drehmomente (Fasermaterial mit hoher Zugfestigkeit, Fasersteigungswinkel in der Nähe von $+45^o$ und $-45^o$),

- Welle oder Feder mit hoher elastischer Energiespeicherfähigkeit (Fasermaterial mit hohen Werten von $\sigma^2/E$ oder $\sigma^2/E\gamma$, Fasersteigungswinkel oder -windungszahlen so gewählt, daß die Zugbeanspruchung bei allen Fasern der Welle ungefähr gleich ist, Beispiel 3),

- Torsionsfeder mit linearer Charakteristik (gleiches Fasermaterial in benachbarten Schichten, Fasersteigungswinkel benachbarter Schichten bis auf die Steigungsrichtung ungefähr gleich und so gewählt, daß sich im gesamten Torsionsbereich genau zwei benachbarte Schichten aufeinander pressen, Beispiele 2 und 3),

- Torsionsfeder mit gekrümmter Charakteristik (unterschiedliches Fasermaterial in benachbarten Schichten oder gegenseitige Beeinflussung unterschiedlich vieler Schichten in Abhängigkeit von der Belastung oder beides),

- Torsions-Zug-Druck-Federn (Beispiel 4),

- Zug-Druck-Federn,

- Wellen oder Federn mit geringen Störkräften bei einer bestimmten Belastung (Beispiele 2 und 3: Axialkräfte gering bei Torsion im Uhrzeigersinn),

- Federn mit vorgegebener Charakteristik,

- Federn mit vorgegebenen Werten für Drehmoment und Axialkraft bei vorgegebener Torsion und Längenänderung,

- Federn mit vorgegebener Änderung des Schichtdurchmessers bei vorgegebener Torsion und Längenänderung (Beispiel 4: Schichtdurchmesseränderung so, daß das Volumen der Feder im Arbeitsbereich weitgehend konstant bleibt),

- Federn, deren Charakteristik durch äußeren Einfluß geändert werden kann, z.B.
Torsionsfedern, deren Charakteristik und Drehwinkel sich durch Veränderung der Federlänge beeinflussen läßt oder von der Axialkraft abhängig ist (Beispiel 4), oder
Zug-Druck-Federn, deren Charakteristik und Länge sich durch Änderung des Drehwinkels beeinflussen läßt oder vom Drehmoment abhängig ist (Beispiel 4), oder

Federn, deren Charakteristik temperaturabhängig ist (Fasermaterialien mit unterschiedlichem Ausdehnungskoeffizienten in benachbarten Schichten),

- Elastische Wellen, deren Zustand, Drehwinkel, Länge oder Durchmesser von äußeren Einflüssen abhängig sind, z.B. Drehung abhängig vom Luftdruck, der Temperatur oder der Luftfeuchtigkeit.

Es ist zu erwarten, daß erfindungsgemäße elastische Wellen nicht nur anstelle von Stahlwellen und Stahlfedern eingesetzt werden, sondern durch ihre hohe Energiespeicherfähigkeit, durch die Möglichkeiten der bisher nicht bekannten Torsions-Zug-Druck-Federn und durch ihre Variationsbreite durch Verwendung unterschiedlicher Fasermaterialien neue Anwendungsgebiete erschließen.

Wie das Beispiel 3 zeigt, erreicht die Energiespeicherfähigkeit erfindungsgemäßer Federn mit guten Glasfasern bereits 25% der Speicherfähigkeit eines Bleiakkus. Es sind aber Whisker verschiedener Materialien mit viel höheren Zugfestigkeitswerten bekannt, Glasfasern stellen sicher noch nicht das in Bezug auf den Kennwert $\sigma^2/E \cdot \varrho$ erreichbare Optimum dar. Insbesondere auf dem Gebiet der Keramikfasern, aber auch bei Kunststoffasern und Kohlenstoffasern sind wahrscheinlich höhere Kennwerte zu erreichen. Erfindungsgemäße Federn sind damit durchaus als reine Energiespeicher interessant. Ihr besonderer Vorteil ist, daß die Speicherung und die Abgabe der Energie in sehr kurzer Zeit erfolgen kann, wahrscheinlich sind sie in diesem Punkte allen bekannten Energiespeichern überlegen.

Als Anwendungsbeispiel für Torsions-Zug-Druck-Federn wurde im Beispiel 4 ein Federgetriebe beschrieben. Federn dieser Art sind in der Lage, eine lineare Bewegung oder Kraft, z.B. eine Druckkraft, in eine Drehbewegung oder ein Drehmoment zu übersetzen oder umgekehrt. Sie sind damit z.B. geeignet als Druckmeß- oder -steuergerät oder als Bauteil eines Druckmotors.

Die Verwendung unterschiedlicher Fasermaterialien eröffnet ebenfalls viele neue Möglichkeiten, erfindungsgemäße Wellen lassen sich damit in weiten Grenzen variieren und an spezielle Anwendungsfälle anpassen. Fasermaterialien mit unterschiedlichen thermischen Ausdehnungskoeffizienten führen zu temperaturabhängigen Wellen, die für Temperaturmeß- und -steuergeräte geeignet sind, aber auch für Wärmekraftmotoren, die bei Temperaturänderung mechanische Energie liefern.

0145810

J 008

Patentansprüche

1. Elastische Welle mit Fasern oder Drähten als wesentlichem Bestandteil zur Übertragung von Drehbewegungen und Drehmomenten oder zur Übersetzung von linearen Bewegungen und Kräften in Drehbewegungen und Drehmomente oder umgekehrt oder zur elastischen Energiespeicherung aufgrund ihrer Federwirkung oder für eine Kombination der Merkmale, dadurch gekennzeichnet, daß sie aus mehreren koaxialen Schichten (1, 2, 3, 4, 5, 6, ...) besteht oder aus spiralförmig angeordneten, annähernd koaxialen Schichten, wie sie durch Aufwicklung von bandförmigen Schichten entstehen, wobei jede Schicht aus wenigstens annähernd parallel zueinander liegenden Fasern oder Drähten (11, 12, 13, 14, 15, 16, ...) besteht oder solche enthält und die Fasern oder Drähte benachbarter Schichten sich miteinander kreuzen.

2. Elastische Welle nach Anspruch 1, dadurch gekennzeichnet, daß die Fasern oder Drähte in ein Trägermaterial eingebettet oder mit Kunststoff vergossen sind.

3. Elastische Welle nach Anspruch 1 zur Übertragung von hohen Drehmomenten, dadurch gekennzeichnet, daß Fasern oder Drähte mit hoher Zugfestigkeit verwendet werden, die so angeordnet sind, daß sich die Fasern oder Drähte in einem Winkel von ungefähr $90^{\circ}$ kreuzen und ihre Steigungswinkel ungefähr $+45^{\circ}$ und $-45^{\circ}$ betragen.

4. Elastische Welle oder Torsionsfeder oder Torsions-Zug-Druck-Feder oder Zug-Druck-Feder nach Anspruch 1, dadurch gekennzeichnet, daß Fasern oder Drähte verwendet werden, bei denen der Wert $\sigma^2/E$ oder der Wert $\sigma^2/E\gamma$ hoch ist, wobei $\sigma$ die maximal zulässige Zugspannung, $E$ der Elastizitätsmodul und $\gamma$ die Dichte des Faser- oder Drahtmaterials ist.

5. Elastische Welle oder Torsionsfeder oder Torsions-Zug-Druck-Feder oder Zug-Druck-Feder nach Anspruch 1, dadurch gekennzeichnet, daß die Steigungswinkel oder Windungszahlen der Fasern oder Drähte so gewählt werden, daß bei einer vorgegebenen maximalen Belastung der Welle bei allen Fasern und Drähten, die auf Dehnung beansprucht werden, die Zugspannung wenigstens annähernd gleich der maximal zulässigen Zugspannung ist.

6. Elastische Welle nach Anspruch 1, dadurch gekennzeichnet, daß unterschiedliche Faser- oder Drahtmaterialien in einer Welle verwendet werden, wobei die Fasern oder Drähte benachbarter Schichten oder die Fasern oder Drähte in Abhängigkeit vom Schichtdurchmesser unterschiedlich sind oder beides zutrifft.

7. Elastische Welle nach Anspruch 6, gekennzeichnet durch Faser- oder Drahtmaterialien mit unterschiedlichem thermischen Ausdehnungskoeffizienten.

8. Verfahren zur Herstellung von elastischen Wellen nach Anspruch 1, dadurch gekennzeichnet, daß zunächst Bänder (8) vorgefertigt werden, die eine oder mehrere Faser- oder Drahtschichten mit den vorgesehenen Steigungswinkeln enthalten und daß dieses Band oder diese Bänder dann zu Wellen gwickelt werden.

Fig. 1

Fig. 2

Fig.3

Fig.4

Fig.5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 421 058 (CELANESE CORP.)  * Insgesamt * | 1,2,4, 6,7 | F 16 C 7/00 F 16 C 3/02 |
| X | US-A-4 214 932 (R.L. VAN AUKEN)  * Insgesamt * | 1,2,6-8 | |
| X | FR-A-2 348 393 (UNION CARBIDE CORP.)  * Insgesamt * | 1-3,6-8 | |
| X | GB-A-1 510 935 (H.P. HOGARTH)  * Insgesamt; Figuren 1-3 * | 1,2,8 | |
| A | US-A-4 248 062 (P.H. McLAIN et al.)  * Insgesamt * | 1-3,6-8 | RECHERCHIERTE SACHGEBIETE (Int. Cl. 3)  F 16 C |

Der vorliegende Recherchenbericht wurde für alle Patentansprüche erstellt.

| Recherchenort DEN HAAG | Abschlußdatum der Recherche 19-07-1984 | Prüfer BEGUIN C.P. |
|---|---|---|